# EUROPEAN PATENT APPLICATION

(11) **EP 2 865 571 A2**
(43) Date of publication of application: **29.04.2015**
(21) Application number: 14189742.1
(22) Date of filing: 21.10.2014
(51) Int. Cl.: B60S 1/50, B62D 25/16

(54) **Integrated fluid reservoir structure and wheel liner splash shield**

(30) Priority: 24.10.2013 US 201361895199 P; 17.10.2014 US 201414516787
(71) Applicant: Continental Automotive Systems, Inc., Auburn Hills, MI 48326 (US)
(72) Inventor: Dissette, Matthew, Washington Township, MI Michigan MI-48094 (US); Griffin, Shawn, Holly, MI Michigan MI-48442 (US); Zaitz, Michael J., Royal Oak, MI Michigan 48067 (US)
(74) Representative: Isarpatent

(57) **Abstract**

A fluid storage system for a vehicle includes a splash shield formed to at least partially define a wheel cavity of the vehicle. At least one reservoir structure is integral with the splash shield. The at least one reservoir structure includes an interior cavity defining a volume for storing fluid. The splash shield and reservoir structure can be molded integrally or can be separate parts that are welded or otherwise coupled together.

## Description

### TECHNICAL FIELD

The present disclosure relates to automotive vehicles and, more particularly, to molded fluid reservoirs for automotive vehicles.

### BACKGROUND

Vehicle washer systems require reservoirs to retain the cleaning fluid until needed. The required fluid reservoir structure size is increasing as more features on vehicles need washing, e.g., front and rear windows, headlights, etc. However, vehicle packaging space is limited for such reservoirs.

Thus, there is a need to provide a washer reservoir structure that is integrated into a splash shield of a vehicle so as to be in a location where reservoir packaging space is available.

### SUMMARY

An objective of the invention is to fulfill the need referred to above. In accordance with the principles of an embodiment, this objective is obtained by providing a fluid storage system for a vehicle that includes a splash shield formed to at least partially define a wheel cavity of the vehicle. At least one reservoir structure is integral with the splash shield. The at least one reservoir structure includes an interior cavity defining a volume for storing fluid. The splash shield and reservoir structure can be molded integrally or can be separate parts that are welded or otherwise coupled together.

In accordance with another aspect of an embodiment, a method provides a fluid storage system for a vehicle. The vehicle includes a splash shield formed to at least partially define a wheel cavity of the vehicle. The method integrates at least one reservoir with the splash shield. The at least one reservoir structure includes an interior cavity defining a volume for storing fluid. At least one pump is mounted with respect to the at least one reservoir structure for pumping fluid from the cavity to at least one location on the vehicle.

Other objectives, features and characteristics of the present invention, as well as the methods of operation and the functions of the related elements of the structure, the combination of parts and economics of manufacture will become more apparent upon consideration of the following detailed description and appended claims with reference to the accompanying drawings, all of which form a part of this specification.

### BRIEF DESCRIPTION OF THE DRAWINGS

The present disclosure will become more fully understood from the detailed description and the accompanying drawings, wherein:
FIG. 1 is a side perspective view of a vehicle's front fender with a reservoir structure integral with a wheel house splash shield via a blow molding technique in accordance with and embodiment.
FIG. 2 is an enlarged view of the reservoir structure integral with a wheel house splash shield of FIG. 1.
FIG. 3 is a view of a reservoir structure ready to be coupled to a wheel house splash shield in accordance with another embodiment.
FIG. 4 is a view of the reservoir structure shown coupled to the splash shield of FIG. 3, with a filler neck coupled to the reservoir structure.

### DETAILED DESCRIPTION OF EXEMPLARY EMBODIMENTS

The following description is merely exemplary in nature and is in no way intended to limit the disclosure, its application, or uses. For purposes of clarity, the same reference numbers will be used in the drawings to identify similar elements.

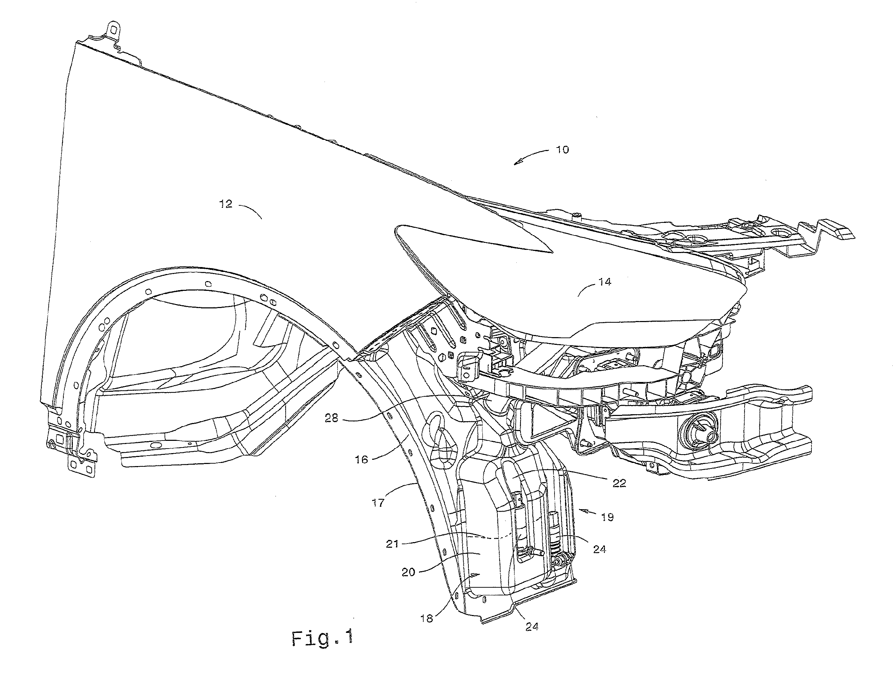

With reference to FIG. 1, a side perspective view of a portion of a vehicle, generally indicated at 10, is shown. The vehicle 10 has a front fender 12 with a head lamp assembly 14 coupled thereto. A wheel house splash shield 16 is coupled to and disposed beneath a portion of the fender 12 so as to define a portion of a wheel cavity 17. In accordance with an embodiment, at least one reservoir structure, generally indicated at 18, is formed integrally with the splash shield 16. The splash shield 16 and reservoir structure 18 are preferably made of plastic and can be integrally formed by a blow molding or other process so as to define a fluid storage system and, in particular, a washer system, generally indicated at 19, for the vehicle 10.

An interior cavity 20 of the reservoir structure defines a volume V for storing fluid, such as cleaning fluid 21 to be used on the vehicle for washing, for example, front and rear windows, headlights, etc.

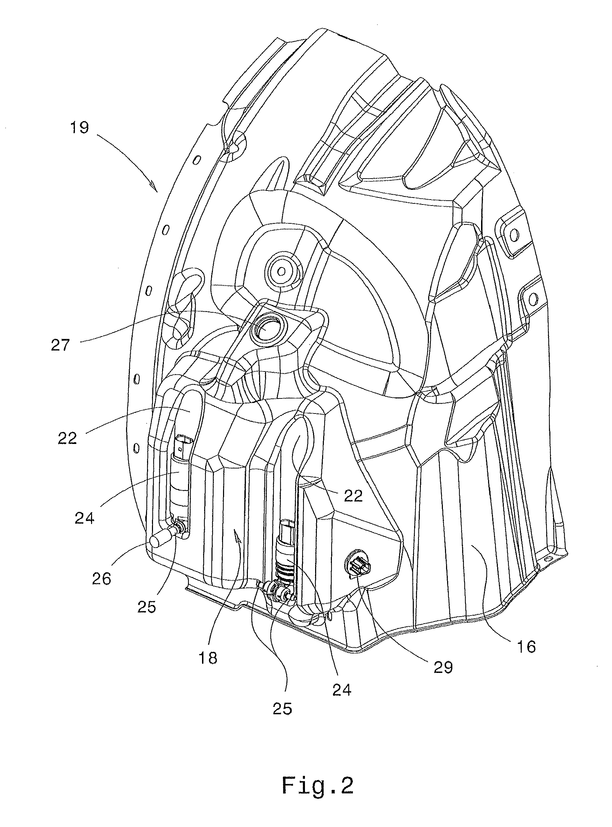

FIG. 2 is an enlarged view of the reservoir structure 18 integral with the splash shield 16. The exterior of the reservoir structure 18 can have surfaces defining at least one recess 22 in an exterior thereof for housing an electrically operated pump 24 for pumping fluid from an outlet 25 of the reservoir structure 18 to the desired vehicle location via a conduit 26. In the embodiment, two pumps 24 and 24' are shown, each in a respective recess 22, 22'. For example, pump 24 can be used for headlight cleaning and pump 24' can be used for window cleaning. All necessary conduits 26 for delivering the fluid 21 are not shown. A top portion of the reservoir structure 18 includes an opening 27 that is in communication with a tube or filler neck 28 (FIG. 1) that is coupled to the reservoir structure 18. The filler neck 28 extends under the hood (not shown) of the vehicle 10 for access by a user for filling the reservoir structure 18. A level sensor assembly 29 extends into the cavity 20 to sense a level of the fluid therein.

The cavity 20 may vary in width and shape to take advantage of the large space available at the splash shield as dictated by the vehicle packaging. Therefore, the integrated washer reservoir structure 18 may take advantage of the splash shield space while not requiring packaging of other components in the engine compartment to be changed to accommodate a reservoir. If desired due to space limitations, multiple small reservoir structures 18 that communicate with a common filler neck 28 that are integral with the splash shield 16 can be provided at various locations on the splash shield 16.

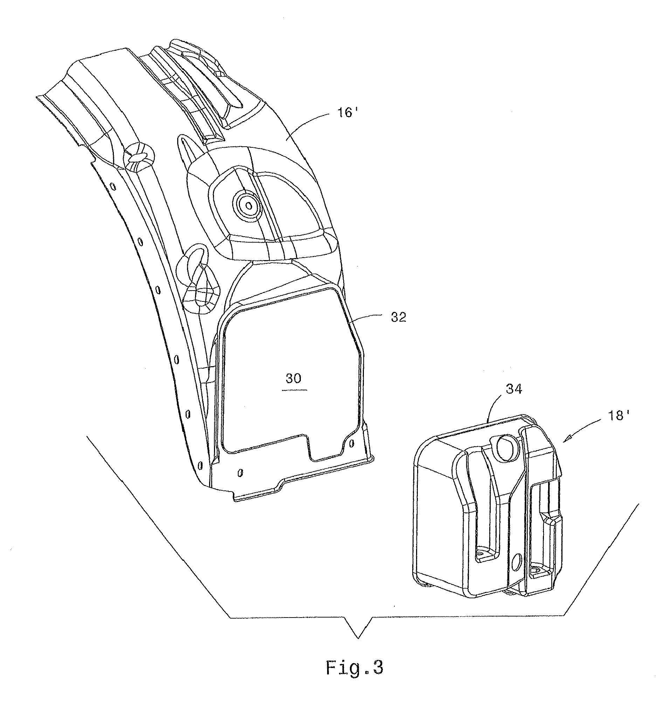

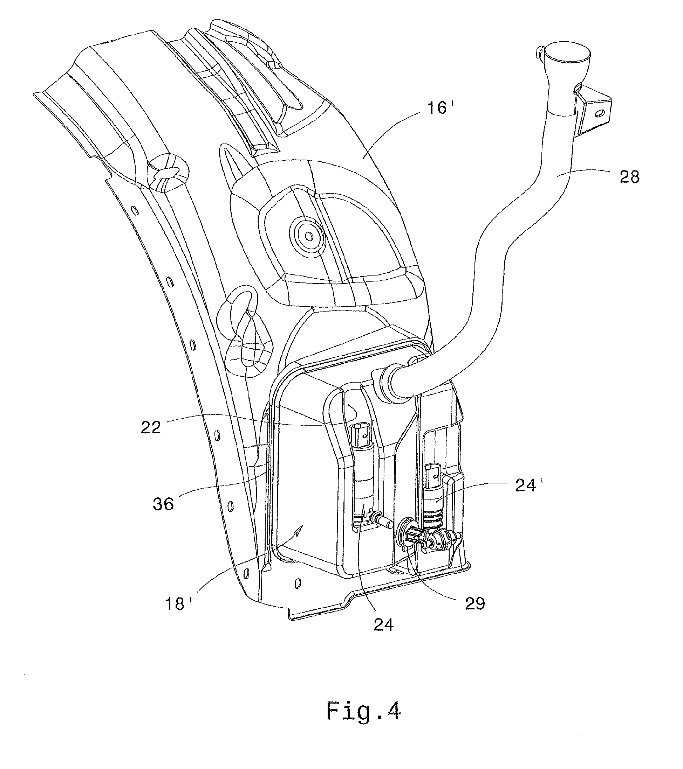

With reference to FIGs. 3 and 4, another embodiment a reservoir structure 18' that is integral with a splash shield 16' is shown. As shown in FIG. 3, an injection molded reservoir structure 18' is molded separate from a splash shield 16' and then is joined with the splash shield 16' to be integral there-with (FIG. 4). The splash shield 16' is molded to have a mounting wall 30 with a flange 32 surrounding a periphery of the wall 30. A mating flange 34 of the reservoir 18' is disposed adjacent to the flange 32 of the wall 30 such that the mounting wall 30 defines a rear wall 30 of the reservoir structure 18', since the reservoir 18' has no rear wall. The use of a common wall 30 between the splash shield 16' and the reservoir 18' to define a wall of the cavity 20 saves material. Alternatively, the reservoir structure 18' can include the mounting wall 30 that is joined at the flange 32 surrounding an opening in the splash shield 16'.

The flange 34 of the reservoir structure 18' is preferably connected to the flange 32 of the splash structure 16' by a continuous, sealed weld connection 36. Alternatively, fasteners (not shown) can be used to join these two parts. If fasteners are used, a seal should be provided between flanges 32 and 34. One skilled in the art would know the proper location and number of attachment points for a particular splash shield 16' and reservoir structure 18'.

Separate integrated reservoir structures 18 may be used based on the locations of the associated splash shields. For example, a front reservoir structure integrated with a front wheel splash shield can be used for windshield and headlamp cleaning and a rear reservoir structure integrated with a rear wheel slash shield can be provided for rear window cleaning. This would reduce the amount of fluid conduits needed to direct the fluid.

The reservoir structure 18, 18' integrated with the splash shield 16, 16' can be used at any of the vehicle wheel locations which have a splash shield. The overall vehicle washer system can use multiple integrated reservoir structures 18 or 18' at the various wheel locations. The integrated reservoir structure may provide increased storage capacity to accommodate the increased demand on the washer system for a vehicle without requiring a proportional increase in packaging space to accommodate the integrated reservoir structure.

With the welded and integrated molded embodiments of the reservoir structure 18, 18', there is no need for fasteners and the cost associated with fastener assembly for a separate reservoir structure. Additionally, the reservoir structure 18, 18' could be used as a reservoir for other fluid systems within the vehicle 10, e.g., heating and cooling, fuel system etc.

While the best modes for carrying out the invention have been described in detail the true scope of the disclosure should not be so limited, since those familiar with the art to which this invention relates will recognize various alternative designs and embodiments for practicing the invention within the scope of the appended claims.

## Claims

1. A fluid storage system for a vehicle comprising:
a splash shield formed to at least partially define a wheel cavity of the vehicle, and
at least one reservoir structure integral with the splash shield, the at least one reservoir structure including an interior cavity defining a volume for storing fluid.

2. The system of claim 1, wherein the at least one reservoir structure and the splash shield are integrally molded from plastic material.

3. The system of claim 1, wherein the at least one reservoir structure and the splash shield are separate parts that are joined together by a weld connection to be integral.

4. The system of claim 3, wherein the at least one reservoir structure and the splash shield include flanges, the weld connection being a continuous weld connecting the flanges.

5. The system of claim 3 or 4, wherein the splash shield or the at least one reservoir structure has a mounting wall that defines a wall of the cavity of the at least one reservoir.

6. The system of claim 5, wherein the mounting wall is part of the splash shield.

7. The system of any of the claims 3-6, wherein the splash shield and the at least one reservoir structure are each separate, injection molded parts.

8. The system according to any of the preceding claims, wherein the reservoir includes at least one recess in an exterior thereof, and the system further comprises a pump received in the at least one recess for pumping fluid from the cavity.

9. The system according to any of the preceding claims, wherein the system is constructed and arranged to store cleaning fluid and the system comprises a first pump and a second pump, the first pump being constructed and arranged to pump the cleaning fluid from the cavity to a first portion of the vehicle and the second pump being constructed and arranged to pump the cleaning fluid from the cavity to a second portion of the vehicle.

10. The system according to any of the preceding claims, further comprising a level sensor constructed and arranged to sense a level of fluid in the cavity.

11. The system according to any of the preceding claims, further comprising a filler neck coupled to the at least one reservoir structure for filling the at least one reservoir structure.
